Europäisches Patentamt

European Patent Office

Office européen des brevets

(19)

(11) Veröffentlichungsnummer: **0 070 486**
**B1**

(12) # EUROPÄISCHE PATENTSCHRIFT

(45) Veröffentlichungstag der Patentschrift:
**27.06.84**

(51) Int. Cl.³: **B 29 D 27/02**, B 29 B 1/06

(21) Anmeldenummer: **82106203.1**

(22) Anmeldetag: **10.07.82**

(54) Verfahren und Einrichtung zum Herstellen eines fliessfähigen Reaktionsgemisches aus mindestens zwei fliessfähigen, miteinander zu Massivstoff oder Schaumstoff reagierenden Reaktionskomponenten.

(30) Priorität: **22.07.81 DE 3128913**

(43) Veröffentlichungstag der Anmeldung:
**26.01.83 Patentblatt 83/4**

(45) Bekanntmachung des Hinweises auf die Patenterteilung:
**27.06.84 Patentblatt 84/26**

(84) Benannte Vertragsstaaten:
**AT BE DE FR GB IT NL**

(56) Entgegenhaltungen:
**DE - A - 1 504 204**
**DE - A - 2 847 504**
**DE - B - 2 612 812**
**DE - C - 2 327 269**

(73) Patentinhaber: **MASCHINENFABRIK HENNECKE GMBH, Postfach 1180, D-5205 St. Augustin 1 (DE)**

(72) Erfinder: **Proksa, Ferdinand, Dr., Am Arenzberg 9, D-5090 Leverkusen 31 (DE)**
Erfinder: **Sulzbach, Hans-Michael, Herman-Loens-Strasse 12, D-5330 Koenigswinter 51 (DE)**
Erfinder: **Raffel, Reiner, Dipl.-Ing., Mueschbungert 2, D-5200 Siegburg (DE)**
Erfinder: **Althausen, Ferdinand, Niederwennerscheid 48, D-5206 Neunkirchen 1 (DE)**

(74) Vertreter: **Müller, Heinz-Gerd, Dipl.-Ing. et al, BAYER AG Konzernverwaltung RP Patentabteilung, D-5090 Leverkusen 1, Bayerwerk (DE)**

## Beschreibung

Die Erfindung richtet sich auf ein Verfahren und eine Vorrichtung zum Herstellen eines fließfähigen Reaktionsgemisches aus mindestens zwei fließfähigen, miteinander zu Massivstoff oder Schaumstoff reagierenden Reaktionskomponenten, wobei die Reaktionskomponenten in einem vorgegebenen Dosierverhältnis in eine Mischzone injiziert und im Durchlauf vermischt werden, und zwar unter Androsseln des die Mischzone verlassenden Gemischstromes, wobei der Gemischstrom beim Verlassen der Mischzone umgelenkt und anschließend beruhigt wird.

Ein Mischkopf zur Durchführung dieses Verfahrens ist aus der DE-C3-2 327 269 bzw. der US-A-3 975 128 bekannt. Der Mischkammer ist hierbei unmittelbar ein Auslaufkanal unter einem rechten Winkel nachgeordnet, der der Beruhigung des Reaktionsgemisches dienen soll und sich durch den zugeordneten Ausstoßkolben reinigen läßt. In der Praxis ist auch schon versucht worden, diesen Ausstoßkolben zum Androsseln des aus der Mischkammer austretenden Reaktionsgemischstromes zu verwenden. Bei schwer vermischbaren Reaktionskomponenten muß eine so starke Androsselung erfolgen, daß es nicht gelingt, den Gemischstrom vor Eintritt in den Formhohlraum in ausreichendem Maße zu beruhigen. Dies äußert sich darin, daß das Reaktionsgemisch aus der Austrittsöffnung des Auslaufkanals herausgespritzt und keine geschlossene Fließfront bildet.

Ein weiterer bekannter Mischkopf (DE-B2-2 612 812 bzw. US-A-4 141 470) weist zwischen Mischkammer und Auslaufrohr als Drosselorgan einen Querschieber auf, der mit einer Durchströmöffnung versehen ist. Durch Verschiebung dieses Drosselorgans läßt sich der gewünschte Durchströmquerschnitt einstellen. Zum Zwecke des Reinigens von Mischkammer und Auslaufrohr wird der Drosselschieber in die Reinigungsstellung gebracht, so daß der Ausstoßkolben durch die Durchströmöffnung hindurchfahren kann. Dieser Mischkopf hat eine relativ große Baulänge. Problematisch ist hierbei die exakte Steuerung von Drosselorgan und Ausstoßkolben, damit keine Kollision dieser beiden Elemente erfolgt. Weiterhin ungünstig ist die sich daraus ergebende große Baulänge des Ausstoßkolbens, denn hierbei besteht die Gefahr, daß ein zwischen Ausstoßkolben und Mischkammer- und Auslaufrohrwandung verbleibender Gemischfilm den Ausstoßkolben mit dieser Wandung verklebt und ein Blockieren des Kolbens verursachen könnte. Um diesem vorzubeugen, muß man für den Ausstoßkolben einen überdimensionierten Antrieb vorsehen. Wegen der Knickgefahr für den Ausstoßkolben muß dieser in bezug auf seine Länge einen gewissen Mindestdurchmesser aufweisen. Deshalb kann man die Querschnitte von Mischkammer und Auslaufrohr nicht beliebig klein dimensionieren. Nachteilig ist weiterhin, daß Mischkammerquerschnitt und Querschnitt des Auslaufrohres übereinstimmen müssen.

Es besteht die Aufgabe, ein Verfahren und eine Einrichtung zu schaffen, womit auch bei der Verarbeitung schwer vermischbarer Reaktionskomponenten eine schnelle Beruhigung des Gemischstromes nach dem Androsseln ermöglicht wird, so daß der Gemischeintrag in ein Formwerkzeug oder dergleichen spritzfrei erfolgt. Die neue Einrichtung soll sich außerdem durch möglichst geringes Bauvolumen und kompakte Bauweise auszeichnen, störunanfällig, betriebssicher und selbstreinigend sein.

Die Lösung besteht darin, daß dem Gemischstrom beim Austritt aus der Drosselzone ein Drall auferlegt wird.

Dadurch wird erreicht, daß der aus der Drosselzone austretende Gemischstrom durch den Drall schnell stabilisiert wird, so daß auf kurzer Strecke bereits eine starke Beruhigung des Gemischstromes erfolgt, der dann spritzfrei in den Hohlraum des Formwerkzeuges eintreten kann.

Eine geeignete Einrichtung zum Durchführen des Verfahrens nach Anspruch 1, d. h. zum Herstellen eines fließfähigen Reaktionsgemisches aus mindestens zwei fließfähigen, miteinander zu Massivstoff oder Schaumstoff reagierenden Komponenten, besteht aus:

a) Vorratsbehältern, von denen
b) Zuleitungen über
c) Dosierpumpen zu einem
d) Mischkopf führen, welcher eine
e) Mischkammer mit darin geführtem
f) Ausstoßkolben enthält, wobei die Zuleitungen mittels
g) Einspritzdüsen in die Mischkammer münden, und wobei
h) zwischen Mischkammer und Auslaufkanal ein Drosselschieber angeordnet ist.

Eine solche Einrichtung ist durch die DE-C3-2 327 269 bekannt.

Das Neue ist darin zu sehen, daß

i) Mischkammer und Auslaufkanal versetzt zueinander angeordnet sind und
j) der Drosselschieber in einem Mischkammer und Auslaufkanal verbindenden Kanal geführt ist, der außermittig zum Auslaufkanal angeordnet ist.

Dadurch gelingt es, den aus der Mischkammer austretenden Gemischstrom in den Auslaufkanal annähernd tangential in dessen Umfangsrichtung eintreten zu lassen. Dadurch wird das aus dem Drosselspalt mit hoher Strömungsgeschwindigkeit austretende Gemisch durch die erzwungene Rotation stark abgebremst und auf kürzester Strecke in eine völlig beruhigte, translatorische Strömung überführt.

Gegenüber den bekannten Ausführungsformen von Mischköpfen sind hier zwar drei bewegbare Elemente, nämlich zwei Ausstoßkolben und ein Drosselorgan, erforderlich; dieser Mehraufwand macht sich jedoch nicht nur in der beschriebenen schnellen Beruhigung des Gemischstromes bemerkbar, sondern dem Fachmann ist auch noch die Möglichkeit gegeben, die Querschnitte von Mischkammer und Auslaufkanal — den Erfordernissen entsprechend — unterschiedlich zu wählen. Außerdem ist — durch entsprechende Gestaltung von Verbindungskanal und Drosselorgan sowie gegebenenfalls durch die Wahl des Winkels zwischen Mischkammer und Auslaufkanal und durch den Grad der Versetzung des Auslaufkanals zur Mischkammer — eine weitere Einflußnahme auf den Herstellungsvorgang des Reaktionsgemisches möglich.

Es versteht sich, daß zum Zwecke der vollständigen Selbstreinigung die Stirnflächen des Ausstoßkolbens der Mischkammer und des Drosselschiebers jeweils den korrespondierenden Gegenflächen der darauffolgenden Bauelemente angepaßt sein müssen.

Die Einrichtung erlaubt ein starkes bis extremes Androsseln des aus der Mischkammer austretenden Gemischstromes, ohne daß beim Eintritt in das Formwerkzeug ein Spritzen erfolgen würde.

In einer Zeichnung ist die erfindungsgemäße Einrichtung in einem Ausführungsbeispiel rein schematisch dargestellt, wobei der Mischkopf selbst ausführlich, die Zusatzaggregate jedoch nur symbolhaft wiedergegeben sind. Es zeigt

Fig. 1 einen Querschnitt durch den Mischkopf der Einrichtung und

Fig. 2 einen Schnitt gemäß der Linie A-B in Fig. 1.

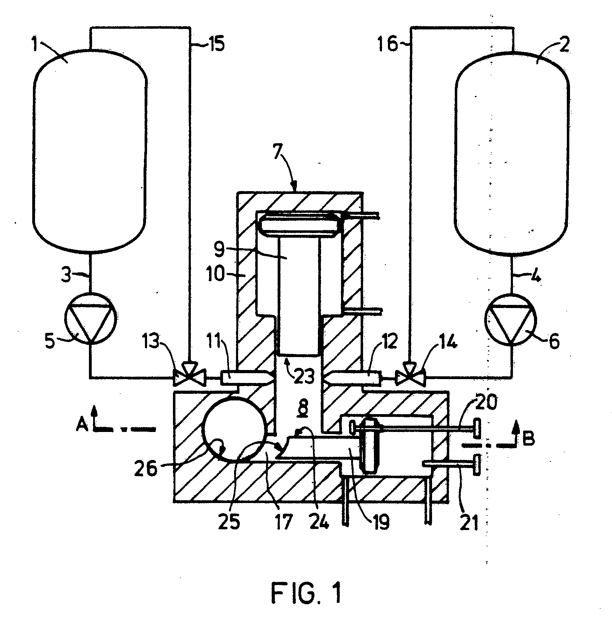

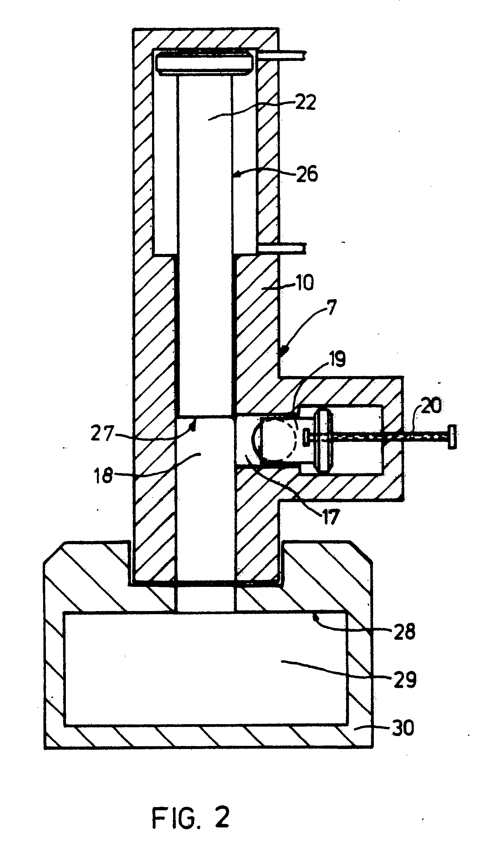

In Fig. 1, 2 führen von Vorratsbehältern 1, 2 für Polyol bzw. Isocyanat Zuleitungen 3, 4 über Dosierpumpen 5, 6 zu einem Mischkopf 7. In diesem ist eine Mischkammer 8 angeordnet, in der ein Ausstoßkolben 9 geführt ist. Im Gehäuse 10 des Mischkopfes 7 sind Einspritzdüsen 11, 12 gelagert, über welche die Zuleitungen 3, 4 in die Mischkammer 8 münden. Umschaltventile 13, 14 ermöglichen die Rückförderung der Reaktionskomponenten über die Rücklaufleitungen 15, 16 in die Vorratsbehälter 1, 2. Der Mischkammer 8 nachgeordnet ist ein Verbindungskanal 17, welcher in einen Auslaufkanal 18 mündet. Im Verbindungskanal 17 ist ein als flacher Drosselschieber ausgebildetes Drosselorgan 19 geführt. Seine Hubweite ist mittels einstellbarer Anschlagschrauben 20, 21 begrenzbar. Der Auslaufkanal 18 ist zur Mischkammer 8 und zum Verbindungskanal 17 rechtwinklig angeordnet und dabei zusätzlich zur Mischkammer 8 seitlich versetzt. Im Auslaufkanal 18 ist ein weiterer Ausstoßkolben 22 geführt. Die Stirnfläche 23 des Ausstoßkolbens 9 ist der zu ihm weisenden Fläche 24 des Drosselorgans 19 angepaßt. Die Stirnfläche 25 des Drosselorgans 19 ist der Umfangskontur 26 des Ausstoßkolbens 22 angepaßt, und die Stirnfläche 27 des Ausstoßkolbens 22 entspricht der Gestaltung der benachbarten Wandung 28 des Formhohlraumes 29 eines nachgeschalteten Formwerkzeuges 30.

## Patentansprüche

1. Verfahren zum Herstellen eines fließfähigen Reaktionsgemisches aus mindestens zwei fließfähigen, miteinander zu Massivstoff oder Schaumstoff reagierenden Reaktionskomponenten, wobei die Reaktionskomponenten in einem vorgegebenen Dosierverhältnis in eine Mischzone (8) injiziert und im Durchlauf vermischt werden, und zwar unter Androsseln des die Mischzone verlassenden Gemischstromes, wobei der Gemischstrom beim Verlassen der Drosselzone umgelenkt und anschließend beruhigt wird, dadurch gekennzeichnet, daß dem Gemischstrom beim Austritt aus der Drosselzone ein Drall auferlegt wird.

2. Einrichtung zur Durchführung des Verfahrens nach Anspruch 1 zum Herstellen eines fließfähigen Reaktionsgemisches aus mindestens zwei fließfähigen, miteinander zu Massivstoff oder Schaumstoff reagierenden Reaktionskomponenten, bestehend aus:

a) Vorratsbehältern (1, 2), von denen
b) Zuleitungen (3, 4) über
c) Dosierpumpen (5, 6) zu einem
d) Mischkopf (7) führen, welcher eine
e) Mischkammer (8) mit darin geführtem
f) Ausstoßkolben (9) enthält, wobei die Zuleitungen (3, 4) mittels
g) Einspritzdüsen (11, 12) in die Mischkammer (8) münden, und wobei
h) zwischen Mischkammer (8) und Auslaufkanal (18) ein Drosselschieber (19) angeordnet ist, dadurch gekennzeichnet, daß

i) Mischkammer (8) und Auslaufkanal (18) versetzt zueinander angeordnet sind und
j) der Drosselschieber (19) in einem Mischkammer (8) und Auslaufkanal (18) verbindenden Kanal (17) geführt ist, der außermittig zum Auslaufkanal (18) angeordnet ist.

## Claims

1. Process for the production of a flowable reaction mixture from at least two flowable reaction components which react with one another to form a solid material or a foam material, wherein the reaction components are injected into a mixing zone (8) in a prescribed metering ratio and are mixed during their passage, with partial throttling of the stream of mixture leaving the mixing zone, the stream of mixture being diverted on leaving the throttling zone and then stabilised, characterised in that rotation is imposed on the stream of mixture as it leaves the throttling zone.

2. Apparatus for carrying out the process according to claim 1 for the production of a flowable reaction mixture from at least two flowable reaction components which react with one another to form a solid material or a foam material, consisting of:

a) supply containers (1, 2) from which

b) feed pipes (3, 4) pass via

c) metering pumps (5, 6) to a

d) mixing head (7) which contains

e) a mixing chamber (8) with

f) an ejecting piston (9) contained therein, the feed pipes (3, 4) opening via

g) injection nozzles (11, 12) into the mixing chamber (8), and wherein

h) a throttle slide (19) is arranged between the mixing chamber (8) and the discharge channel (18), characterised in that

i) the mixing chamber (8) and the discharge channel (18) are in displaced relation to one another and

j) the throttle slide (19) is contained in a channel (17) connecting the mixing chamber (8) with the discharge channel (18), which channel (17) is arranged eccentrically in relation to the discharge channel (18).

**Revendications**

1. Procédé pour fabriquer un mélange réactionnel fluide à partir d'au moins deux composants de réaction fluides réagissant l'un avec l'autre pour donner un produit massif ou un produit moussant, les composants de réaction étant injectés en un rapport de dosage prédéterminé dans une zone de mélange (8) et étant mélangés au passage, et ceci par freinage du courant de mélange quittant la zone de mélange, le courant de mélange étant alors, lorsqu'il quitte la zone de freinage, dévié et ensuite laissé au repos, caractérisé en ce qu'on fait subir une torsion au courant de mélange lors de sa sortie hors de la zone de freinage.

2. Dispositif pour mettre en oeuvre le procédé selon la revendication 1 pour fabriquer un mélange de réaction fluide à partir d'au moins deux composants de réaction fluides réagissant l'un avec l'autre pour former un produit massif ou un produit moussant, constitué par:

a) des récipients réservoirs (1, 2) à partir desquels

b) des conduites (3, 4) mènent par l'intermédiaire de

c) pompes de dosage (5, 6) à une

d) tête mélangeuse (7) qui contient

e) une chambre de mélange (8) ayant

f) un piston de refoulement (9) guidé dans ladite chambre, les conduites (3, 4) au moyen de

g) buses d'injection (11, 12) débouchant dans la chambre de mélange (8) et

h) un tiroir d'étranglement (19) étant disposé entre la chambre de mélange (8) et un canal de sortie (18), caractérisé en ce que

i) la chambre de mélange (8) et le canal de sortie (18) sont disposés de manière à être décalés l'un par rapport à l'autre et

j) en ce que le tiroir d'étranglement (19) est guidé dans un canal (17) reliant la chambre de mélange (8) et le canal de sortie (18) et qui est disposé en dehors du centre par rapport au canal de sortie (18).

FIG. 1

FIG. 2